Europäisches Patentamt

(19) European Patent Office

Office européen des brevets

(11) Numéro de publication: **0 161 178**
**A1**

## (12) DEMANDE DE BREVET EUROPEEN

(21) Numéro de dépôt: 85400751.5

(22) Date de dépôt: 16.04.85

(51) Int. Cl.⁴: **A 47 J 39/02**

(30) Priorité: 17.04.84 FR 8406039

(43) Date de publication de la demande:
13.11.85 Bulletin 85/46

(84) Etats contractants désignés:
AT BE CH DE GB IT LI LU NL SE

(71) Demandeur: Hervieu, Michel
32, rue Emile Peigné
F-28800 Bonneval(FR)

(72) Inventeur: Hervieu, Michel
32, rue Emile Peigné
F-28800 Bonneval(FR)

(74) Mandataire: Chevallier, Robert Marie Georges
Cabinet BOETTCHER 23, rue La Boétie
F-75008 Paris(FR)

(54) Ensemble de chariots et de bornes de mise en température en particulier pour service de repas collectifs.

(57) Il comprend d'une part des chariots (1) ayant de préférence un compartiment inférieur (4) pour la conservation des plats à + 3° C ayant une ouverture obturable (6) et un compartiment supérieur (5) pour le réchauffage des plats à servir chauds ayant une ouverture obturable (7), d'autre part une borne ayant une source de froid inférieure avec une ouverture (13) et une source de chaud supérieure ayant une ouverture (14), lesdites ouvertures venant s'accoler pour le refroidissement ou le réchauffage des plats selon les besoins.

Fig.1

L'invention a pour objet un ensemble comprenant au moins un chariot, utilisable en particulier pour la préparation de plats individuels dans les collectivités comme les hôpitaux, et au moins une borne de mise, et éventuellement de maintien, de l'intérieur de ce chariot et des plats qu'il contient à une température désirée de conservation ou de consommation.

On emploie actuellement dans les collectivités telles que les hôpitaux ou les hospices, des chariots à parois isolantes qui sont équipés chacun d'un groupe de réfrigération. En raison du nombre élevé des repas à fournir dans les chambres des divers services, à la même heure ou à des heures peu différentes, il est nécessaire de préparer à l'avance des plats individuels que l'on range dans des chariots à l'aide desquels on fait ensuite la distribution au moment voulu.

Afin que les aliments conservent leurs qualités, il est obligatoire, conformément à des règles et des normes d'hygiène, que le volume intérieur des chariots soit maintenu pendant toute la durée de l'attente avant la distribution des repas à une température positive peu élevée qui est généralement fixée à + 3° C. A cette fin, chaque chariot est équipé d'un groupe frigorifique et peut être considéré comme une chambre froide mobile, montée sur roues.

Certains plats, notamment les plats à base de viande, ont besoin d'être réchauffés avant d'être servis ; il existe alors divers moyens de réchauffage, soit des genres d'étuves collectives, soit des étagères chauffantes, soit des fours individuels à infrarouge extérieurs aux chariots, soit encore des volumes de réchauffage prévus sur les chariots eux-mêmes ; on réchauffe les plats à l'aide de ces moyens peu de temps avant de commencer la distribution des repas.

Il résulte de cette situation que les chariots connus jusqu'à présent pour la distribution des repas préparés longtemps à l'avance dans les collectivités sont coûteux, encombrants, lourds et de conduite peu aisée en raison de leur poids et de leurs dimensions.

2

0161178

L'invention a pour but d'apporter une simplification considérable aux moyens actuels de conservation et de distribution des repas dans les collectivités et dans la restauration collective en général.

Selon l'invention, il existe d'une part un chariot à parois isolantes réalisables selon trois types différents, c'est-à-dire un type pour repas froids, un type pour repas chauds, un type mixte, et une borne réalisable aussi selon trois types différents en correspondance avec les trois types de chariots, cette borne comprenant selon son type soit une source d'air froid, soit une source d'air chaud, soit une source d'air froid et une source d'air chaud disposées dans deux compartiments distincts ; en outre, le chariot et la borne ont des ouvertures correspondantes destinées à être accolées pour permettre de créer une circulation d'air froid ou d'air chaud à l'intérieur du chariot.

Dans un mode de réalisation de l'invention, chaque source d'air froid et d'air chaud comprend un ventilateur au moins monté en face de l'ouverture pour refouler de l'air à travers celle-ci en direction du volume intérieur du chariot.

De préférence, chaque ouverture de la borne est divisée en deux parties par une cloison et le ou les ventilateurs sont disposés en face de l'une de ces parties avec leur côté amont mis en communication avec l'autre partie.

Dans un chariot mixte et une borne mixte, selon un mode préféré de réalisation de l'invention, le chariot a un compartiment inférieur pour le maintien au froid des plats en attente et un compartiment supérieur pour le réchauffage juste avant la distribution des plats à servir chauds, chaque compartiment ayant une ouverture et la borne mixte ayant aussi une ouverture inférieure de fourniture d'air froid et une ouverture supérieure de fourniture d'air chaud.

Bien entendu, dans une collectivité donnée, les chariots sont en nombre suffisant ainsi que les bornes ; dans le cadre de l'invention il peut exister des bornes ayant plusieurs faces présentant chacune une ouverture pour fournir de l'air froid, ou une ouverture pour fournir de l'air chaud, ou deux ouvertures l'une pour le froid l'autre pour le chaud, chaque borne étant ainsi capable de fournir simultanément à plusieurs chariots de l'air à la température désirée.

On donnera maintenant, sans intention limitative et sans exclure aucune variante, une description d'un exemple de réalisation de l'invention. On se reportera au dessin annexé dans lequel :

- la figure 1 est une vue en élévation en coupe par un plan vertical d'un chariot mixte et d'une borne mixte conformes à l'invention sur le point d'être accolés,

- la figure 2 est une vue de dessus en coupe par un plan horizontal selon II-II de la figure 1,

- la figure 3 est une vue de dessus d'une borne à plusieurs faces à laquelle sont accolés plusieurs chariots.

Dans l'exemple décrit ici les chariots et les bornes sont du type mixte pour la conservation de plats froids et la distribution de plats froids et de plats chauds. Il est extrêmement facile d'en déduire le mode de construction des chariots simples et des bornes simples destinés à conserver et à distribuer des plats froids seulement ou à distribuer des plats chauds seulement.

Les chariots sont munis d'un équipement intérieur (plateaux à claire-voies, clayettes, porte-plats ou porte-récipients spéciaux, etc...) adapté aux besoins et au matériel utilisé (casseroles, marmites, plats, assiettes, etc...). Cet équipement intérieur, connu et variable selon les collectivités, n'a pas été représenté et ne sera pas décrit. Cependant, dans l'esprit de l'invention, la totalité de l'équipement intérieur est amovible de sorte que le chariot peut être mis effectivement à l'état complètement vide où il est représenté sur les figures.

Un chariot mixte 1 conforme à l'invention a des parois 2 fortement isolantes et une cloison intérieure 3 également isolante qui limite un compartiment inférieur 4 et un compartiment supérieur 5. De préférence le compartiment inférieur 4 a un volume largement plus grand que celui du compartiment supérieur 5.

Chaque compartiment 4, 5 présente dans une même face du chariot une ouverture, 6, 7 respectivement, qui peut être totalement dégagée, ou obturée au moyen d'une porte ouvrante ou démontable (non représentée).

Une borne mixte 8 conforme à l'invention a aussi des parois isolantes 9 et une cloison intérieure 10 également isolante qui limite un compartiment inférieur 11 et un compartiment supérieur 12. Ces deux compartiments 11, 12 ont dans une même face de la borne 8 chacun une ouverture 13, 14 respectivement qui est au même niveau, respectivement en correspondance et identique en dimensions, à l'ouverture 6 et à l'ouverture 7 du chariot 1. Ces ouvertures 13, 14 peuvent être obturées par une porte (non représentée) si on le désire bien que ce ne soit pas strictement nécessaire au point de vue fonctionnel.

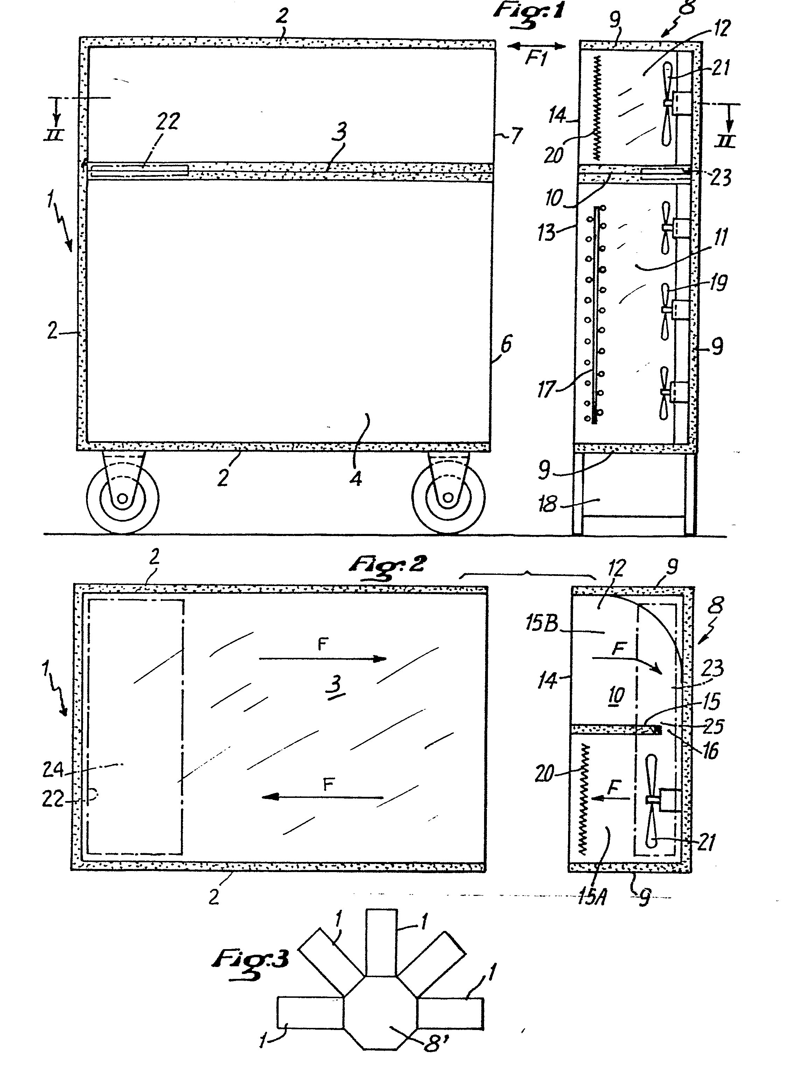

Les ouvertures 6 et 13 d'une part et 7 et 14 d'autre part du chariot 1 et de la borne 8 peuvent être accolées exactement par leur périmètre simplement par le déplacement du chariot comme indiqué par une flèche F1 sur la figure 1. Un joint périmétrique en caoutchouc est prévu de préférence autour de chaque ouverture 13, 14 de la borne 8 pour assurer l'étanchéité du raccordement des ouvertures. De même, des moyens de verrouillage (non représentés) peuvent être prévus si on le juge utile pour solidariser momentanément le chariot 1 et la borne 8.

L'ouverture 13, 14 de chaque compartiment 11, 12 de la borne 8 est divisée par une cloison verticale 15 en une première partie 15A et une seconde partie 15B ; chaque cloison 15 ne s'étend que sur une partie seulement de la profondeur du compartiment et laisse un passage de circulation arrière 16.

Le compartiment inférieur 11 de la borne 8 constitue une source d'air froid grâce à un évaporateur 17 qu'il contient du côté de la première partie de l'ouverture 13 et qui est un élément d'une unité frigorifique 18 placée sous ce compartiment 11. Avantageusement, cet évaporateur 17 est monté en aval d'un aspirateur 19, au moins, qui est disposé de façon que son côté amont, ou côté de l'aspiration, communique par le passage de circulation arrière avec l'autre partie de l'ouverture 13 du compartiment 11.

Le compartiment supérieur 12 de la borne 8 constitue une source d'air chaud grâce à une résistance électrique de chauffage 20 qu'il contient dans la première partie 15A de l'ouverture 15, montée en aval d'un ventilateur 21 ; celui-ci est disposé de façon que son côté amont communique par le passage de circulation arrière 16 avec l'autre partie 15 B de l'ouverture 15 de ce compartiment 12.

L'utilisation du chariot 1 et de la borne 8 de l'invention est la suivante.

On range dans le compartiment inférieur 4 du chariot 1 la totalité des mets et des plats préparés à l'avance, puis on accole l'ouverture 6 de ce compartiment à l'ouverture 13 de la borne 8 et on met en marche l'unité frigorifique 18 ainsi que les ventilateurs 19. Il se crée une circulation d'air froid qui intéresse tout le volume du compartiment inférieur 4 et qui refroidit son contenu à la température voulue. On peut laisser le chariot 1 accolé à la borne 8 pendant toute la durée de l'attente, ou, si l'isolation des parois 2 est suffisante, on peut retirer le chariot, obturer l'ouverture 6 du compartiment inférieur 4 et le laisser en attente.

Environ 15 minutes avant l'heure du service, on retire du compartiment inférieur 4 les plats qui doivent être servis chauds, on les range dans le compartiment supérieur 5 et on accole à nouveau le chariot à la borne. On met en service la résistance électrique de chauffage 20 et le ventilateur 21 pour créer dans ce compartiment supérieur 5 seul une circulation d'air chaud, indiquée par des flèches F sur la figure 2, qui réchauffe son contenu.

Avec le chariot 1 que l'on vient de décrire, les deux compartiments inférieur 4 et supérieur 5, respectivement pour le froid et pour le chaud, sont distincts et s'utilisent séparément, ce qui oblige à transférer les plats à servir chaud quelque temps avant le service, comme expliqué ci-dessus, afin de les réchauffer.

Il est possible dans le cadre de l'invention de ménager, dans la cloison intérieure 3 du chariot 1 et dans la cloison intérieure 10 de la borne 8, des registres indiqués en trait mixte 22, 23 qui pourraient être escamotés à volonté dans le reste de la cloison 3 ou 10 par un moyen de commande extérieur (non représenté) afin de dégager une ouverture correspondante 24, 25 (figure 2) permettant à l'air froid de circuler aussi dans le compartiment supérieur 5, quand on le désire. La mise en marche du ventilateur 21 du compartiment supérieur 12 de la borne 8, en sens inverse de son sens de rotation pour le réchauffage, faciliterait cette circulation de l'air froid pendant la période de refroidissement. De cette façon, il n'est plus nécessaire de transférer entre les deux compartiments les plats à réchauffer. Il suffit de les ranger dès le début dans le compartiment supérieur 5 et au moment voulu de fermer les ouvertures 24, 25, de mettre en service la résistance chauffante 20 et le ventilateur 21 tournant dans le sens voulu pour le réchauffage. Cet agencement peut permettre aussi le réchauffage des plats contenus dans le compartiment inférieur 4.

La figure 3 montre une borne 8' qui présente huit faces dans chacune desquelles se trouvent une ouverture inférieure 13 de soufflage d'air froid et une ouverture supérieure 14 de soufflage d'air chaud, pour huit chariots 1, dont cinq seulement sont représentés. Cette borne 8' peut n'avoir qu'une seule unité frigorifique 18 de puissance convenable pour tous les chariots.

Les chariots de l'invention ont un volume général qui est inférieur de 1/3 au volume des chariots classiques à groupe frigorifique individuel et un poids inférieur de 60 % au poids de ces mêmes chariots. Ils sont d'un maniement beaucoup plus facile et peuvent même être transportés par camions, après refroidissement ou réchauffement à partir d'une cuisine centrale. En outre, il est possible de les laver facilement et rapidement au jet d'eau, ce qui n'est pas permis avec les chariots actuels munis d'un équipement électrique.

Il doit être entendu qu'il entre dans le cadre de l'invention de placer dans un même compartiment 12 (par exemple) de la borne 8 à la fois une résistance électrique de chauffage 20 et un évaporateur 17, destinés à être mis en service séparément, de façon qu'un même compartiment soit littéralement, et à volonté, une source d'air chaud ou une source d'air froid.

## REVENDICATIONS

1. Ensemble chariot-borne pour mise en température de plats individuels en restauration collective comprenant un chariot (1) à parois isolantes (2) divisé par une cloison intérieure (3), avec des ouvertures obturables (6, 7) dans une même face frontale, une borne (8) divisée par une cloison intérieure (10) en deux compartiments (11, 12) contenant respectivement une source d'air chaud et une source d'air froid, avec dans une face frontale des ouvertures (13, 14) auxquelles les ouvertures (6, 7) peuvent être accolées, caractérisé en ce que la cloison intérieure (3) du chariot (1) est une cloison horizontale faisant apparaître un compartiment inférieur (4) et un compartiment supérieur (5) et ayant une ouverture (24) de communication entre ces deux compartiments (4, 5) obturable par un registre (22) cependant que la cloison intérieure (10) de la borne (8) est aussi une cloison horizontale qui correspond à la cloison horizontale (3) et qui a une ouverture (25) de communication entre les compartiments (11, 12) obturable par un registre (23).

2. Ensemble selon la revendication 1 caractérisé en ce que chacun des compartiments (11, 12) de la borne (8) est divisé à partir de son ouverture (13, 14) par une cloison verticale (15) en une première partie (15A) et une seconde partie (15B) laissant subsister un passage de communication arrière (16) cependant que la source d'air froid et la source d'air chaud comprenant chacune au moins un ventilateur (19, 21) sont disposées respectivement dans la première partie (15A) par rapport à laquelle le passage de communication (16) est en amont pendant l'utilisation.

3. Ensemble selon la revendication 1 caractérisé en ce que la source de chaleur comprenant un ventilateur (21) est disposée dans le compartiment supérieur (12) limité par la cloison intérieure horizontale (10).

4. Ensemble selon la revendication 3 caractérisé en ce que le ventilateur (21) de la source de chaleur disposée dans le compartiment supérieur (12) est du type réversible.

1/1

*Fig:1*

*Fig:2*

*Fig:3*

Office européen
des brevets

**RAPPORT DE RECHERCHE EUROPEENNE**

EP 85 40 0751

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | DE-A-2 354 419  (BURGER) <br> * En entier * | 1 | A 47 J  39/02 |
| A | FR-A-2 442 035  (BEIZERMANN) <br> * En entier * | 1 | |
| A | FR-A-2 411 368  (BEIZERMANN) <br> * En entier * | 1 | |
| A | GB-A-2 066 441  (SANKYO) <br> * Page  1, lignes 74-98; figures 1,2 * | 1 | |
| E | EP-A-0 143 066  (GRANDI) | | |
| A | FR-A-2 037 447  (LAURENT) | | DOMAINES TECHNIQUES RECHERCHES (Int. Cl.4) <br><br> A 47 J <br> A 47 B |

Le présent rapport de recherche a été établi pour toutes les revendications

| Lieu de la recherche | Date d'achèvement de la recherche | Examinateur |
|---|---|---|
| LA HAYE | 04-07-1985 | SCHARTZ J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503 03 82